# EUROPEAN PATENT SPECIFICATION

(11) **EP 3 575 994 B1**
(45) Date of publication and mention of the grant of the patent: **18.08.2021**
(21) Application number: 18175383.1
(22) Date of filing: 31.05.2018
(51) Int. Cl.: G06F 21/31, H04L 29/06, H04W 12/06

(54) **METHOD AND SYSTEM FOR REAL-TIME-PROOFING OF A RECORDING**
VERFAHREN UND SYSTEM ZUR ECHTZEIT-SICHERUNG EINER AUFZEICHNUNG
PROCÉDÉ ET SYSTÈME DE VÉRIFICATION EN TEMPS RÉEL D'UN ENREGISTREMENT

(43) Date of publication of application: 04.12.2019
(73) Proprietor: Nect GmbH, 20457 Hamburg (DE)
(72) Inventor: JÜRGENS, Benny Bennet, 21077 Hamburg (DE); KOHN, Fabian, 22177 Hamburg (DE)
(74) Representative: Seemann & Partner Patentanwälte mbB

(56) References cited:
- WO-A1-2015/163774
- US-A1- 2015 254 443
- US-A1- 2016 231 830
- US-A1- 2017 032 114

## Description

The present invention is concerned with a method and a system for real-time proofing of a recording, wherein a recording is captured using a recording device equipped with a vibration device and with at least one of at least one microphone, at least one camera and at least one accelerometer, wherein the vibration device is physically connected to the recording device such that it causes the recording device to vibrate when activated, providing physical tactile and/or haptic feedback.

Real-time proofing of recordings is necessary in many instances, for example, in which an identification or authentication is performed via a recording, be it an audio recording or video recording, which may have the video track only or video track and an audio track. Such identification or authentication through recordings may be falsified by presenting a pre-recorded recording, which may be tampered with or stolen. In order to ensure that the recording is done without tampering, such recordings are frequently watermarked. A watermark is an identifier that may be used for a number of recordings or which may be unique or quasi-unique to each recording. Unique or quasi-unique watermarks are used in order to provide proof of uniqueness of the recording and therefore provide a higher standard of security in the context of identification or authentication.

Known methods for watermarking recordings include adding sound files into the recording inside a recording device digitally, which may be based on a series of sense of given frequencies indicative of a unique or quasi-unique watermarking specification and subsequently analysed by means of, for example, Fourier analysis. In some cases, such sounds are played by a speaker of the recording device during the time of the recording and captured by the microphone of the recording device. Such a method is disclosed in US 2017/0220786 A1, for example.

US 2015/0254443 A1 discloses a method for biometric authentication of a user by a challenge/response procedure with a mobile station including authenticating the enrolled user before performing a transaction. A communication channel is set up between the mobile station and an authentication server and a challenge from the authentication server is forwarded to the mobile station. A response sequence expressed by the user is recorded simultaneously with ambient signals or a response of the ambience. The recorded response sequence and the recorded ambient signals are forwarded to the authentication server and evaluated based on related biometric data retrieved from the database. It is verified whether the user corresponds to the enrolled user. The ambient signals and identifying signal changes within the ambient signals are evaluated, and it is determined whether the identified signal changes represent a logical sequence of events in the user's vicinity.

In WO 2015/163774, an audio-based system is disclosed that includes a processor including watermark logic to output a first watermark to an output device that outputs a first watermark signal, based on the first watermark, to an acoustic transmission medium. The processor also includes a recording logic to capture, at a first time period, an authentication submission comprising the first watermark signal convolved, via the acoustic transmission medium, with a first passphrase signal.

Such known methods have the advantage that the sound-based watermarking is unobtrusive, since it is either applied digitally or the watermarking sounds are usually chosen outside the audible range. Consequently, the user is usually unaware of the watermarking during the recording. However, this also means that the user will not be certain that a proper watermarking has been achieved. In case of watermarking sounds being played and recorded, there is the added complication that those sounds have to compete with environmental noise and may be recorded with a degree of attenuation and background noise that makes the identification and analysis of the watermarking signals difficult or faulty later on.

It is therefore an object of the present invention to provide a method and a system for real-time proofing of the recording which will increase the success rate and level of security of watermarking.

This object is achieved by a method for real-time proofing of a recording, wherein a recording is captured using a recording device equipped with a speaker device, a vibration device and with at least one of at least one microphone, at least one camera and at least one accelerometer, wherein the vibration device is physically connected to the recording device such that it causes the recording device to vibrate when activated, providing physical tactile and/or haptic feedback, wherein the recording is watermarked by activating the vibration device at least once during the recording according to at least one predetermined unique or quasi-unique watermarking sequence, wherein the vibrations caused by activating the vibration device are recorded as visible and/or acceleration watermarking, and in particular additionally as audible watermarking, in the recording.

In the context of the present application, a unique watermarking sequence is a watermarking sequence that is unique to a single instance of use, whereas a quasi-unique watermarking sequence may be chosen or generated from a limited set of watermarking sequences, the set being large enough to make an accidental iteration of the same watermark unlikely. Depending on the intended use or frequency of use, the set may contain dozens, hundreds, thousands or more of such predetermined sequences.

Furthermore, audible and visible watermarkings are to be understood as the audible and, respectively, visible effects of the activation of the vibration device on the audio track and the video track of the recording, respectively. An acceleration watermarking is to be understood as a vibrational watermarking as sensed by an accelerometer or acceleration sensor present in many modern recording devices.

Such accelerometers usually record and log acceleration in 3-tuples, namely with respect to x-, y- and z-axes relative to an arbitrary reference frame of the recording device, of floating point values representing the acceleration along the respective axis, typically in the unit of meters per square second or g (9,81 m/s²). Raw acceleration data may then be extracted from the accelerometer at a specified sample rate, e.g., 100 Hz, which is preferably equal or higher than a video frame rate and/or a vibration frequency used by the vibration device. The data may be provided as a vector *[t, aₓ, a_{y}, a_{z}]* of timestamps *t* and accelerations *aₓ, a_{y}, a_{z}* in *x-, y-* and z-directions at the respective times.

The logged acceleration data may be transmitted as a separate data stream, e.g. a text file or a string, which may or may not be encrypted and/or cryptographically signed. The data may alternatively be embedded as global metadata in the recording. Most audio or video container formats support addition of arbitrary metadata. The data may also be embedded as metadata on a frame-to-frame basis, since some audio and video container formats support such metadata on frame level. The acceleration data may furthermore be embedded as visible or audible data in the audio or video stream itself, if present, or be hidden (e.g. steganographically) in the video or audio stream itself, if present, without the knowledge of a possible attacker intercepting the message.

Processing methods for the accelerometer data are similar to the processing of audio data, since they are similar by nature. These methods include, e.g., but are not limited to extraction or cropping of relevant sections of the recorded data; noise suppression in the accelerometer data, e.g., from constant vibrations present in a vehicle or unintentional movements by the end user, in one or multiple axes; normalization of the accelerometer data in one or multiple axes; template and/or pattern matching of the vibration sequence(s) with a reference; Fourier analysis, principal component analysis or wavelet analysis and similar methods to extract or validate the vibration frequencies. The signals may be isolated from other components of the data stream, *e.g*., by filtering, such as filtering on low frequency noise up to 50 Hz or 100 Hz representative of vibration signals, which may also be accounted for by choosing an appropriate sampling frequency.

Analysis of accelerometer measurements may include, among others, consistency assessment of video and/or audio data and accelerometer sensor data through, e.g., template analysis; (cross-)correlation analysis of "background" magnitudes and patterns, e.g., between visible movements in the video caused by the end user and measured accelerations; temporal association of vibration magnitude or patterns observed in video, audio and/or accelerometer data during watermarking; assessment of environment and cross-check with previous cases and/or stored data.

Analysis of the video data may include an analysis of picture sharpness, since the vibration will produce a certain amount of blurring. The sharpness analysis may be done via averaging of contrast steepness (pixel-to-pixel variation of brightness) with respect to brightness (greyscale) and/or colour values, and/or edge sharpness detection.

Analysis of audio data may include many of the aforementioned analysis methods in connection with the analysis of the accelerometer data, and may include one or more of, among others, normalization of the amplitude of the audio track or audio recording, cropping to the parts of the recording containing the watermarking signals and filtering using high pass, low pass or band pass filters.

Using recording devices with vibration devices opens the possibility to use vibration of the recording device by activation of the vibration device for the purpose of watermarking a recording. Such devices may be, e.g., smartphones, tablet computers or laptops with built-in vibration devices, such as vibration motors, linear drives or similar devices to cause physical feedback, such as taptic engine®. The purpose of a taptic engine® is to provide tactile and/or haptic feedback and cause vibration of the device or parts of it. Usually, vibration devices are shut down during recordings so as not to interrupt and degrade the recording, be it an audio recording or video recording. However, it has been found that vibration pulses are clearly detectable in audio recordings as well as in video recordings as recognisable background noise or as recognisable distortions or blurring in the video track. Vibrations, which usually are a nuisance in the context of recordings, can therefore serve to provide clearly recognisable watermarks in the recording. A further benefit is that a user will be aware that a proper watermarking has been applied to the recording while it is being made.

It is almost impossible for a potential attacker to manipulate a recording in its audio track or in its video track or associated accelerometer data with respect to the specific watermarking signals or sequences caused by the activation of the vibration device of the recording device, as well as predicting the exact unique or quasi-unique watermarking sequence, which may have a large number of parameters that may be altered in order to make the watermarking sequence unique. Therefore, a very robust real-time proof is achieved. This may be interesting in the context of asserting identities via selfie videos, for example. Other applications may be voice authentication in a bot system, such as systems using chat bots or telephone bots, such that the real-time proofing check may accompany a challenge mechanism such as a pass phrase. Optical distortions through vibrations may be useful, for example, in video chats to certify that a person, for example the client, is present, in contrast to a pre-recorded recording being played. This is explained in detail in the applicant's European Patent Application entitled *"Method and System for Validating Remote Live Identification via Video-Recording",* filed on the same date as the present application with European application number 18 175 372.4. The vibration watermarking has the benefit of universal application in audio tracks and video tracks.

Such vibration watermarking according to the present invention may be accompanied by more classical watermarking through insertion of audible or non-audible sounds (non-noise), which may carry additional information coded into the frequency and pulse structure of the sound watermarks.

The recording of the unique or quasi-unique vibration watermarking sequence or sequences may either be only as audible, visible or acceleration watermarking, or as combination of audible and visible watermarking, as combination of audible and acceleration watermarking or as combination of visible and acceleration watermarking, or as combination of audible, visible and acceleration watermarking, meaning the effects of the activation of the vibration device measurable in one, two or all three channels, namely audio track, video track and accelerometer data.

In embodiments, the recording is an audio recording, a video recording, or a recording of text, in particular of a text chat session wherein in particular the video recording has a video track and an audio track. The recording may be streamed or transmitted after recording, and analysed while being streamed or asynchronously after the recording has been concluded. Apart from audio or video recordings, text recordings may also be recorded with timing information, such as the sequence and rhythm of keystrokes. Such recordings, which may be acquired in messenger or chat applications, but also in text editing software, or when entering notes or passwords on a handheld device, may be superimposed with vibration watermarking sequences to be appropriately sensed by video, audio or acceleration capture components of the recording device. The taps or keystrokes of the user on the handheld device will also appear as signals in the acceleration sensor data and may be used in conjunction with the vibration watermarking sequence for a combined real-time proofing of the recording.

In a further embodiment, the recording device is connected or connectable to at least one server device, wherein prior to starting the recording, the recording device requests the at least one unique or quasi-unique watermarking sequence from the at least one server device, upon receiving the request from the recording device, the at least one server device selects or generates the at least one unique or quasi-unique watermarking sequence and provides the at least one unique or quasi-unique watermarking sequence to the recording device. By this, a system is established, which may serve to provide watermarking specification as well as subsequent analysis of recordings with respect to the presence or absence of expected watermarking signals according to the provided unique or quasi-unique watermarking sequence. Such a system may be used for various purposes, from real-time proofing of single recordings to avoid man-in-the-middle attacks, for example, to more involved remote identification protocols using multiple authentication and verification methods and liveness checks, wherein liveness checks serve to prove the presence of a user at the time of the recording. This may be achieved, *e.g*., by requiring the customer to provide a video of themselves, *e.g*., by means of a selfie-video, during which they are required to prove their presence by some means of challenge-response mechanism, *e.g*., having to read back some randomly generated words or performing a certain randomly induced action.

In embodiments, the at least one unique or quasi-unique watermarking sequence is a non-random or random series of one or more vibration pulses. The watermarking sequence may include timing information and length information of the pulse or pulses and, in case of more than one pulse, pauses between pulses. In cases in which different vibration frequencies are supported by a vibration device, with frequencies changing stepwise and/or continuously, the watermarking sequence may include vibration frequency information.

According to a further embodiment, the at least one unique or quasi-unique watermarking sequence includes a start time, wherein the start time is counted from the beginning of the recording or from the start time or end time of a previous unique or quasi-unique watermarking sequence. This increases the parameter space available for analysing the authenticity of the watermarking signal and furthermore saves analysis time, since the analysis may start at or shortly before the predetermined start time, conserving analysis capacity for the rest of the recording. However, the rest of the recording may be analysed for other purposes or for the presence of further watermarking signals. The start time may alternatively be a predetermined time of day.

In an embodiment, the recording device is equipped with an accelerometer, wherein signals of the accelerometer are included in the data of the recording. Such measuring signals of the accelerometer may be included in a metafile accompanying the recording or may be transformed and embedded in an audio track or video track of the recording, as mentioned before. For example, if the accelerometer measures an acceleration indicative of an activation of the vibration device, the sound of a pre-specified frequency may be overlaid over the audio track for the duration of the detected acceleration, or a pixel or a cluster of pixels in the video track may be set to predefined values, for example, white, indicating the presence of detection of an acceleration signal and black, indicating the absence of such an acceleration signal. The analysis of the accelerometer signal is to be implemented on the recording device and may be model-specific.

According to another embodiment, after finishing the recording, the recording device transmits the recording to the at least one server device and the server device analyses the recording for the presence of the at least one unique or quasi-unique watermarking sequence. The server device may be a server computer with software running on the server computer performing the analysis. Furthermore, the same server device or a different server device may be a server computer with software running on the server computer providing the generation or selection of unique or quasi-unique watermarking sequences.

In one embodiment, in case the recording is a video recording, a video track of the recording is analysed for distortions caused by the activation of the vibration device, and/or, in case the recording is an audio recording or a video recording including an audio track, the audio recording or audio track is analysed using an acoustic noise and/or sound level detection with respect to noise and/or sound caused by the activation of the vibration device. The analysis of the recording for the presence of the at least one unique or quasi-unique watermarking sequence may include one or more of background noise suppression in the audio track of the watermarked recording and a timestamp verification of detected signals.

The object of the present invention is also achieved by a system for real-time proofing of a recording, in particular one of an audio recording, a video recording and a text recording, comprising a recording device equipped with a speaker device, a vibration device and with at least one of at least one microphone, at least one camera and at least one accelerometer, wherein the vibration device is physically connected to the recording device such that it causes the recording device to vibrate when activated, providing physical tactile and/or haptic feedback, wherein the recording device is configured to watermark a recording by activating the vibration device at least once during the recording according to at least one predetermined unique or quasi-unique watermarking sequence, and to record the vibrations caused by activating the vibration device as visible and/or acceleration watermarking, and in particular additionally as audible watermarking, in the recording.

This embodiment of a system according to the present invention embodies the same advantages, features and characteristics of the method according to the invention described here above.

In an embodiment, the system further comprises at least one server device to which the recording device is connected or connectable, wherein the recording device is configured to request the at least one unique or quasi-unique watermarking sequence from the at least one server device, wherein the server device is configured to, upon receiving the request from the recording device, select or generate the at least one unique or quasi-unique watermarking sequence and provide the at least one unique or quasi-unique watermarking sequence to the recording device.

In an embodiment, the server device may be co-located on the recording device. This may be the case, if the recording device is, e.g., a smartphone with all the necessary components, wherein the recording device and the server device are run as separate applications on the same device.

In an embodiment, the recording device is configured to include signals of the accelerometer in the data of the recording.

The recording device and the server device preferably are configured to carry out a method described above according to the present invention. Preferentially, the recording device is configured to transmit the recording to the at least one server device after finishing the recording and the server device is configured to analyse the recording for the presence of the at least one unique or quasi-unique watermarking sequence, in particular according to the inventive method described above.

Further characteristics of the invention will become apparent from the description of the embodiments according to the invention together with the claims and the included drawing. Embodiments according to the invention can fulfill individual characteristics or a combination of several characteristics.

The invention is described below, without restricting the general intent of the invention, based on an exemplary embodiment, wherein reference is made expressly to the drawing with regard to the disclosure of all details according to the invention that are not explained in greater detail in the text.

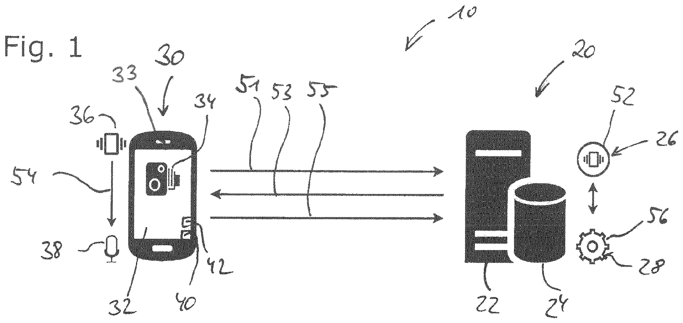

Fig. 1 shows a schematic depiction of a system carrying out a method according to an embodiment of the invention. A system 10 comprising a server device 20 and a recording device 30 is shown, wherein the recording device 30 is remotely connected to the server device 20. The server device 20 is represented as a standard server comprising a computing device 22, such as, for example, a computer, and a storage device 24. The computing device 22 may have implemented a first unit 26 for generating or selecting unique or quasi-unique watermark signatures and a second unit 28 for analysis of the watermarked recordings. The recording device 30 is represented as a smartphone, wherein several features have been depicted in addition, on top of display 32, namely a camera 34, a vibration device 40 and an accelerometer 42. In addition, a speaker device 33 is present. A microphone 38 is also shown.

The server device 20 may be located anywhere, such as a central location for a multitude of applications or uses. In this case, an identification and authentication provider may be contracted by specific service providers to provide identification and authentication of users for their services. Alternatively, the server device 20 may be located locally with a service provider and dedicated to one service only.

The system is not limited to the server device 20 as depicted in Fig. 1 or the smartphone as recording device 30 as depicted in Fig. 1. The recording device 30 may also be a laptop, a tablet device or some other dedicated device capable and configured to carry out the parts of the process assigned to the recording device 30.

In the following, an embodiment of the method of the invention will be described with respect to the system shown in Fig. 1.

In a first step, the recording device 30 initialises a process case with the server device 20. As part of the initialization, the recording device 30 requests in step 51 a unique or quasi-unique watermark sequence from the server device 20. The unique or quasi-unique watermark sequence may contain specific instructions for generating a unique or quasi-unique watermark vibrational signal 36.

The server device 20 then generates in step 52 one or more unique or quasi-unique watermark sequences containing a set or sets of *n_{Pulse}* pulses with randomly or non-randomly chosen or generated lengths and pauses in between, as well as a timestamp or timestamps *t_{play}.* The pulses can have different duration features, e.g., regularly pulsed, randomly pulsed or constant, or different frequency characteristics. Instead of generating the unique or quasi-unique watermark sequence, the unique or quasi-unique watermark sequence may also be randomly or deterministically chosen from a multitude of pre-generated and stored unique or quasi-unique watermark sequences. The deterministic choice may be synchronised over time or count of requests.

The unique or quasi-unique watermark sequence is then provided to the recording device 30 in step 53. In step 54, the recording device 30 captures a video recording or audio recording and generates or plays back a unique or quasi-unique watermark signal 36 by activating the vibration device 40 according to the unique or quasi-unique watermark sequence at the provided time index *t_{play}* relative to the start of the recording on the recording device 30, watermarking the recording in the process.

This sort of vibration watermarking may be employed, e.g., in video recordings such as a selfie-video of a user identifying him or her to a distant third party, during which the user is presented with a liveness-check such as a word challenge, where he or she is confronted with words to be uttered or spoken during the recording, which may also be generated or selected by the server device 20. Another example is a video of a personal identification document, *e.g.,* an ID card, a passport, a driver's license or a health insurance ID card, during which the user may be requested to move the document in question in a way that certain security features, e.g., holograms, are visible and/or change over time, or generally any kind of video recording, not limited to the above examples.

In step 55, the recording device 30 sends the watermarked recording back to the server device 20 for analysis. The server device 20 performs in step 56 an analysis of the watermarked recording with respect to finding the embedded watermark and thereby validating the video recording by means of the unique or quasi-unique watermark sequence and any further validation and liveness check information embedded therein. In particular, the server device 20 may perform one, multiple or all of the following steps:
- Noise suppression to reduce background noise,
- timestamp verification to validate that the unique or quasi-unique watermarking sequence started at the requested time *t_{play},*
- pattern verfication to validate that changes in generated pulsing are present in the recording as well,
- voice matching of spoken words in selfie-video with archived voice data, if present.

A video may comprise both video footage of the face and sound of the voice of the user and of the personal identification document to be presented upon prompting by the recording device 30. Any commands to the user, for example, for showing the personal identification document, for specific movements of the personal identification document, for pronouncing a unique pass phrase, may be accompanied by inaudible acoustic watermarks specific to the specific command so that the analysis of the video file with respect to the personal identification document and the speaking of the unique pass phrase may be helped by restricting the respective analysis to those parts of the video that are watermarked with respect to the commands given to the user. These command related watermarks are not to be confused with the unique or quasi-unique watermark signatures.

The analysis may also include identification of lip movements and correlation of the lip movements of the user with a unique pass phrase presented to the user, or a full voice recognition for identification of the utterance of the unique pass phrase by the user.

Identification of the unique or quasi-unique watermark signature inside the watermarked recording may be achieved by analysing the audio track and/or the video track for signals indicative of the activation of the vibration device 40 of the recording device 30. Such a signal will present itself in the video signal as the blurring or distortion present during the time of the activation of the vibration device 40. Depending on the interference between the frequency of the vibration device and the frequency of image capture in the video sequence, the vibration may lead to a periodic wobbling of the captured image. The vibration may also be picked up by an accelerometer 42, which information may be also be time indexed and transmitted to the server device 20 for analysis.

Such vibrational watermarking may be accompanied by acoustic watermarking, using audible or inaudible frequencies which have been randomly or non-randomly selected into a unique sound watermarking specification or file to be reproduced at the time of recording.

All named characteristics, including those taken from the drawing alone, and individual characteristics, which are disclosed in combination with other characteristics, are considered alone and in combination as important to the invention. Embodiments according to the invention can be fulfilled through individual characteristics or a combination of several characteristics. Features which are combined with the wording "in particular" or "especially" are to be treated as preferred embodiments.

### List of references

- 10: system
- 20: server device
- 22: computing device
- 24: storage device
- 26: first unit
- 28: second unit
- 30: recording device
- 32: display
- 33: speaker device
- 34: camera
- 36: vibration signal
- 38: microphone
- 40: vibration device
- 42: accelerometer
- 51: request unique or quasi-unique watermark sequence
- 52: generate/select unique or quasi-unique watermark sequence
- 53: provide unique or quasi-unique watermark sequence
- 54: capture recording, play back unique or quasi-unique watermark signal
- 55: send watermarked recording to server device
- 56: analyse watermarked recording

## Claims

1. Method for real-time proofing of a recording, wherein a recording is captured using a recording device (30) equipped with a speaker device (33), a vibration device (40) and with at least one of at least one microphone (38), at least one camera (34) and at least one accelerometer (42), wherein the vibration device (40) is physically connected to the recording device (30) such that it causes the recording device (30) to vibrate when activated, providing physical tactile and/or haptic feedback, wherein the recording is watermarked by activating the vibration device (40) at least once during the recording according to at least one predetermined unique or quasi-unique watermarking sequence, wherein the vibrations caused by activating the vibration device (40) are recorded as visible and/or acceleration watermarking, and in particular additionally as audible watermarking, in the recording.

2. Method according to claim 1, **characterised in that** the recording is an audio recording, a video recording or a recording of text, in particular of a text chat session, wherein in particular the video recording has a video track and an audio track.

3. Method according to claim 1 or 2, **characterised in that** the recording is streamed or transmitted after recording, and analysed while being streamed or asynchronously after the recording has been concluded

4. Method according to one of claims 1 to 3, **characterised in that** the recording device (30) is connected or connectable to at least one server device (20), wherein prior to starting the recording, the recording device (30) requests the at least one unique or quasi-unique watermarking sequence from the at least one server device (20), upon receiving the request from the recording device (30), the at least one server device (20) selects or generates the at least one unique or quasi-unique watermarking sequence and provides the at least one unique or quasi-unique watermarking sequence to the recording device (30).

5. Method according to one of claims 1 to 4, **characterised in that** the at least one unique or quasi-unique watermarking sequence is a non-random or random series of one or more vibration pulses, wherein in particular the watermarking sequence includes timing information and length information of the puls or pulses and, in case of more than one pulse, pauses between pulses, and/or vibration frequency information.

6. Method according to one of claims 1 to 5, **characterised in that** the at least one unique or quasi-unique watermarking sequence includes a start time, wherein the start time is counted from the beginning of the recording or from the start time or end time of a previous unique or quasi-unique watermarking sequence.

7. Method according to one of claims 1 to 6, **characterised in that** the recording device (30) is equipped with an accelerometer (42), wherein signals of the accelerometer (42) are included in the data of the recording.

8. Method according to one of claims 1 to 7, **characterised in that** after finishing the recording, the recording device (30) transmits the recording to the at least one server device (20) and the server device (20) analyses the recording for the presence of the at least one unique or quasi-unique watermarking sequence.

9. Method according to claim 8, **characterised in that**, in case the recording is a video recording, a video track of the recording is analysed for distortions caused by the activation of the vibration device (40), and/or, in case the recording is an audio recording or a video recording including an audio track, the audio recording or audio track is analysed using an acoustic noise and/or sound level detection with respect to noise and/or sound caused by the activation of the vibration device (40).

10. Method according to claim 8 or 9, **characterised in that** the analysis of the recording for the presence of the at least one unique or quasi-unique watermarking sequence includes one or more of background noise suppression in the audio track of the watermarked recording and a timestamp verification of detected signals.

11. System (10) for real-time proofing of a recording, in particular one of an audio recording, a video recording and a text recording, comprising a recording device (30) equipped with a speaker device (33), a vibration device (40) and at least one of at least one microphone (38), at least one camera (34) and at least one accelerometer (42), wherein the vibration device (40) which is physically connected to the recording device (30) such that it causes the recording device (30) to vibrate when activated, providing physical tactile and/or haptic feedback, wherein the recording device (30) is configured to watermark a recording by activating the vibration device (40) at least once during the recording according to at least one predetermined unique or quasi-unique watermarking sequence, and to record the vibrations caused by activating the vibration device (40) as visible and/or acceleration watermarking, and in particular additionally as audible watermarking, in the recording.

12. System (10) according to claim 11, further comprising at least one server device (20) to which the recording device (30) is connected or connectable, **characterised in that** the recording device (30) is configured to request the at least one unique or quasi-unique watermarking sequence from the at least one server device (20), wherein the server device (20) is configured to, upon receiving the request from the recording device (30), select or generate the at least one unique or quasi-unique watermarking sequence and provide the at least one unique or quasi-unique watermarking sequence to the recording device (30).

13. System (10) according to claim 11 or 12, **characterised in that** the recording device (30) is configured to include signals of the accelerometer (42) in the data of the recording.

14. System (10) according to one of claims 11 to 13, **characterised in that** the recording device (30) and the server device (20) are configured to carry out a method according to one of claims 1 to 7.

15. System (10) according to one of claims 11 to 14, **characterised in that** the recording device (30) is configured to transmit the recording to the at least one server device (20) after finishing the recording and the server device (20) is configured to analyse the recording for the presence of the at least one unique or quasi-unique watermarking sequence, in particular according to the method of one of claims 8 to 10.

## Patentansprüche

1. Verfahren zur Echtzeitüberprüfung einer Aufzeichnung, wobei eine Aufzeichnung unter Verwendung einer Aufzeichnungseinrichtung (30) aufgenommen wird, die mit einer Lautsprechereinrichtung (33), einer Vibrationseinrichtung (40) und mit wenigstens einem von wenigstens einem Mikrophon (38), wenigstens einer Kamera (34) und wenigstens einem Beschleunigungsmesser (42) ausgestattet ist, wobei die Vibrationseinrichtung (40) physisch mit der Aufzeichnungseinrichtung (30) verbunden ist, sodass sie die Aufzeichnungseinrichtung (30) zum Vibrieren bringt, wenn sie aktiviert wird, wodurch eine physische taktile und/oder haptische Rückmeldung erzeugt wird, wobei die Aufzeichnung durch wenigstens einmaliges Aktivieren der Vibrationseinrichtung (40) während der Aufzeichnung gemäß wenigstens einer vorbestimmten einzigartigen oder quasi-einzigartigen Wasserzeichensequenz mit Wasserzeichen versehen wird, wobei die Vibrationen, die durch Aktivieren der Vibrationseinrichtung (40) verursacht werden, in der Aufzeichnung als sichtbares und/oder Beschleunigungswasserzeichen und insbesondere zusätzlich als hörbares Wasserzeichen aufgezeichnet werden.

2. Verfahren nach Anspruch 1, **dadurch gekennzeichnet, dass** die Aufzeichnung eine Audioaufzeichnung, eine Videoaufzeichnung oder eine Aufzeichnung von Text, insbesondere einer Textchatsitzung ist, wobei insbesondere die Videoaufzeichnung eine Videospur und eine Audiospur aufweist.

3. Verfahren nach Anspruch 1 oder 2, **dadurch gekennzeichnet, dass** die Aufzeichnung gestreamt oder nach der Aufzeichnung übertragen wird und während sie gestreamt wird oder asynchron, nachdem die Aufzeichnung abgeschlossen wurde, analysiert wird.

4. Verfahren nach einem der Ansprüche 1 bis 3, **dadurch gekennzeichnet, dass** die Aufzeichnungseinrichtung (30) mit wenigstens einer Servereinrichtung (20) verbunden oder verbindbar ist, wobei die Aufzeichnungseinrichtung (30) vor dem Starten der Aufzeichnung die wenigstens eine einzigartige oder quasi-einzigartige Wasserzeichensequenz von der wenigstens einen Servereinrichtung (20) anfordert, wobei die wenigstens eine Servereinrichtung (20) bei Empfang der Anforderung von der Aufzeichnungseinrichtung (30) die wenigstens eine einzigartige oder quasi-einzigartige Wasserzeichensequenz auswählt oder erzeugt und der Aufzeichnungseinrichtung (30) die wenigstens eine einzigartige oder quasi-einzigartige Wasserzeichensequenz bereitstellt.

5. Verfahren nach einem der Ansprüche 1 bis 4, **dadurch gekennzeichnet, dass** die wenigstens eine einzigartige oder quasi-einzigartige Wasserzeichensequenz eine nicht zufällige oder zufällige Reihe eines oder mehrerer Vibrationsimpulse ist, wobei insbesondere die Wasserzeichensequenz Zeitinformationen und Längeninformationen des Impulses oder der Impulse und im Fall von mehr als einem Impuls Pausen zwischen Impulsen und/oder Vibrationsfrequenzinformationen umfasst.

6. Verfahren nach einem der Ansprüche 1 bis 5, **dadurch gekennzeichnet, dass** die wenigstens eine einzigartige oder quasi-einzigartige Wasserzeichensequenz eine Startzeit umfasst, wobei die Startzeit ab dem Beginn der Aufzeichnung oder ab der Startzeit oder Endzeit einer vorherigen einzigartigen oder quasi-einzigartigen Wasserzeichensequenz gezählt wird.

7. Verfahren nach einem der Ansprüche 1 bis 6, **dadurch gekennzeichnet, dass** die Aufzeichnungseinrichtung (30) mit einem Beschleunigungsmesser (42) ausgestattet ist, wobei Signale des Beschleunigungsmessers (42) in den Daten der Aufzeichnung umfasst sind.

8. Verfahren nach einem der Ansprüche 1 bis 7, **dadurch gekennzeichnet, dass** die Aufzeichnungseinrichtung (30) die Aufzeichnung nach Abschluss der Aufzeichnung an die wenigstens eine Servereinrichtung (20) überträgt, und die Servereinrichtung (20) die Aufzeichnung auf das Vorhandensein der wenigstens einen einzigartigen oder quasi-einzigartigen Wasserzeichensequenz analysiert.

9. Verfahren nach Anspruch 8, **dadurch gekennzeichnet, dass** in dem Fall, dass die Aufzeichnung eine Videoaufzeichnung ist, eine Videospur der Aufzeichnung auf Störungen analysiert wird, die durch die Aktivierung der Vibrationseinrichtung (40) verursacht werden, und/oder in dem Fall, dass die Aufzeichnung eine Audioaufzeichnung oder eine Videoaufzeichnung ist, die eine Audiospur umfasst, die Audioaufzeichnung oder Audiospur unter Verwendung einer Detektion von akustischen Geräuschen und/oder des Schallpegels in Bezug auf Geräusche und/oder Schall analysiert wird, die durch die Aktivierung der Vibrationseinrichtung (40) verursacht werden.

10. Verfahren nach Anspruch 8 oder 9, **dadurch gekennzeichnet, dass** die Analyse der Aufzeichnung auf das Vorhandensein der wenigstens einen einzigartigen oder quasi-einzigartigen Wasserzeichensequenz eines oder mehrere der Folgenden umfasst: Unterdrückung von Hintergrundgeräuschen in der Audiospur der Wasserzeichenaufzeichnung und eine Zeitstempelverifizierung von detektierten Signalen.

11. System (10) zur Echtzeitüberprüfung einer Aufzeichnung, insbesondere einer von einer Audioaufzeichnung, einer Videoaufzeichnung und einer Textaufzeichnung, das eine Aufzeichnungseinrichtung (30) umfasst, die mit einer Lautsprechereinrichtung (33), einer Vibrationseinrichtung (40) und mit wenigstens einem von wenigstens einem Mikrophon (38), wenigstens einer Kamera (34) und wenigstens einem Beschleunigungsmesser (42) ausgestattet ist, wobei die Vibrationseinrichtung (40), die physisch mit der Aufzeichnungseinrichtung (30) verbunden ist, sodass sie die Aufzeichnungseinrichtung (30) zum Vibrieren bringt, wenn sie aktiviert wird, physische taktile und/oder haptische Rückmeldung erzeugt, wobei die Aufzeichnungseinrichtung (30) dazu ausgestaltet ist, eine Aufzeichnung durch wenigstens einmaliges Aktivieren der Vibrationseinrichtung (40) während der Aufzeichnung gemäß wenigstens einer vorbestimmten einzigartigen oder quasi-einzigartigen Wasserzeichensequenz mit Wasserzeichen zu versehen und die Vibrationen, die durch Aktivieren der Vibrationseinrichtung (40) verursacht werden, in der Aufzeichnung als sichtbares und/oder Beschleunigungswasserzeichen und insbesondere zusätzlich als hörbares Wasserzeichen aufzuzeichnen.

12. System (10) nach Anspruch 11, ferner umfassend wenigstens eine Servereinrichtung (20), mit der die Aufzeichnungseinrichtung (30) verbunden oder verbindbar ist, **dadurch gekennzeichnet, dass** die Aufzeichnungseinrichtung (30) dazu ausgestaltet ist, die wenigstens eine einzigartige oder quasi-einzigartige Wasserzeichensequenz von der wenigstens einen Servereinrichtung (20) anzufordern, wobei die Servereinrichtung (20) dazu ausgestaltet ist, bei Empfang der Anforderung von der Aufzeichnungseinrichtung (30) die wenigstens eine einzigartige oder quasi-einzigartige Wasserzeichensequenz auszuwählen oder zu erzeugen und der Aufzeichnungseinrichtung (30) die wenigstens eine einzigartige oder quasi-einzigartige Wasserzeichensequenz bereitzustellen.

13. System (10) nach einem der Ansprüche 11 bis 12, **dadurch gekennzeichnet, dass** die Aufzeichnungseinrichtung (30) dazu ausgestaltet ist, Signale des Beschleunigungsmessers (42) in den Daten der Aufzeichnung zu umfassen.

14. System (10) nach einem der Ansprüche 11 bis 13, **dadurch gekennzeichnet, dass** die Aufzeichnungseinrichtung (30) und die Servereinrichtung (20) dazu ausgestaltet sind, ein Verfahren nach einem der Ansprüche 1 bis 7 auszuführen.

15. System (10) nach einem der Ansprüche 11 bis 14, **dadurch gekennzeichnet, dass** die Aufzeichnungseinrichtung (30) dazu ausgestaltet ist, die Aufzeichnung nach Abschluss der Aufzeichnung an die wenigstens eine Servereinrichtung (20) zu übertragen und die Servereinrichtung (20) dazu ausgestaltet ist, die Aufzeichnung auf das Vorhandensein der wenigstens einen einzigartigen oder quasi-einzigartigen Wasserzeichensequenz zu analysieren, insbesondere gemäß dem Verfahren nach einem der Ansprüche 8 bis 10.

## Revendications

1. Un procédé de vérification en temps réel d'un enregistrement, dans lequel un enregistrement est capturé à l'aide d'un dispositif d'enregistrement (30) équipé d'un dispositif de haut-parleur (33), d'un dispositif de vibration (40) et d'au moins l'un parmi au moins un microphone (38), au moins un appareil (34) de prise de vues et au moins un accéléromètre (42), le dispositif de vibration (40) étant physiquement connecté au dispositif d'enregistrement (30) de telle sorte qu'il amène le dispositif d'enregistrement (30) à vibrer lorsqu'il est activé, fournissant un retour physique tactile et / ou haptique, l'enregistrement étant marqué numériquement en activant le dispositif de vibration (40) au moins une fois pendant l'enregistrement selon au moins une séquence de marquage numérique unique ou quasi-unique prédéterminée, les vibrations provoquées par l'activation du dispositif de vibration (40) étant enregistrées sous forme de marquage numérique visible et / ou d'accélération, et en particulier, de façon additionnelle, sous forme de marquage numérique audible, dans l'enregistrement.

2. Procédé selon la revendication 1, **caractérisé en ce que** l'enregistrement est un enregistrement audio, un enregistrement vidéo ou un enregistrement de texte, notamment d'une session de chat textuel, l'enregistrement vidéo comportant notamment une piste vidéo et une piste audio.

3. Procédé selon la revendication 1 ou la revendication 2, **caractérisé en ce que** l'enregistrement est diffusé ou transmis après enregistrement, et analysé tout en étant diffusé en streaming ou de manière asynchrone après que l'enregistrement ait été terminé.

4. Procédé selon l'une des revendications 1 à 3, **caractérisé en ce que** le dispositif d'enregistrement (30) est connecté ou connectable à au moins un dispositif serveur (20) ; avant de démarrer l'enregistrement, le dispositif d'enregistrement (30) fait une requête pour ladite au moins une séquence de marquage numérique unique ou quasi-unique auprès dudit au moins un dispositif serveur (20) ; lors de la réception de la requête provenant du dispositif d'enregistrement (30), ledit au moins un dispositif serveur (20) sélectionne ou génère ledit au moins une séquence de marquage numérique unique ou quasi-unique et fournit ladite au moins une séquence de marquage numérique unique ou quasi-unique au dispositif d'enregistrement (30).

5. Procédé selon l'une des revendications 1 à 4, **caractérisé en ce que** ladite au moins une séquence de marquage numérique unique ou quasi-unique est une série non aléatoire ou aléatoire d'une ou plusieurs impulsions de vibration ; la séquence de marquage numérique comprend notamment des informations de synchronisation. et des informations de longueur de l'impulsion ou des impulsions et, dans le cas de plus d'une impulsion, des pauses entre les impulsions, et / ou des informations de fréquence de vibration.

6. Procédé selon l'une des revendications 1 à 5, **caractérisé en ce que** ladite au moins une séquence de marquage numérique unique ou quasi-unique comprend une heure de début, l'heure de début étant comptée à partir du début de l'enregistrement ou à partir de l'heure de début ou de l'heure de fin d'une séquence de marquage numérique unique ou quasi-unique précédente.

7. Procédé selon l'une des revendications 1 à 6, **caractérisé en ce que** le dispositif d'enregistrement (30) est équipé d'un accéléromètre (42), les signaux de l'accéléromètre (42) étant inclus dans les données de l'enregistrement.

8. Procédé selon l'une des revendications 1 à 7, **caractérisé en ce qu'**après avoir terminé l'enregistrement, le dispositif d'enregistrement (30) transmet l'enregistrement audit au moins un dispositif serveur (20) et le dispositif serveur (20) analyse l'enregistrement pour la présence de ladite au moins une séquence de marquage numérique unique ou quasi-unique.

9. Procédé selon la revendication 8, **caractérisé en ce que**, dans le cas où l'enregistrement est un enregistrement vidéo, une piste vidéo de l'enregistrement est analysée pour ce qui est des distorsions provoquées par l'activation du dispositif de vibration (40), et / ou, dans le cas où l'enregistrement est un enregistrement audio ou un enregistrement vidéo comprenant une piste audio, l'enregistrement audio ou la piste audio est analysé à l'aide d'une détection de bruit acoustique et / ou de niveau sonore par rapport au bruit et / ou au son provoqué par l'activation du dispositif de vibration (40).

10. Procédé selon la revendication 8 ou la revendication 9, **caractérisé en ce que** l'analyse de l'enregistrement pour ce qui est de la présence de ladite au moins une séquence de marquage numérique unique ou quasi-unique comprend une ou plusieurs suppression de bruit de fond dans la piste audio de l'enregistrement marqué numériquement et une vérification d'horodatage des signaux détectés.

11. Système (10) de vérification en temps réel d'un enregistrement, en particulier de l'un parmi un enregistrement audio, un enregistrement vidéo et un enregistrement de texte, comprenant un dispositif d'enregistrement (30) équipé d'un dispositif de haut-parleur (33), d'un dispositif de vibration (40) et d'au moins l'un parmi au moins un microphone (38), d'au moins un appareil (34) de prise de vues et d'au moins un accéléromètre (42), le dispositif de vibration (40), qui est physiquement connecté au dispositif d'enregistrement (30) de telle sorte qu'il amène le dispositif d'enregistrement (30) à vibrer lorsqu'il est activé, fournissant un retour physique tactile et / ou haptique, le dispositif d'enregistrement (30) étant configuré pour marquer numériquement un enregistrement en activant le dispositif de vibration (40) au moins une fois pendant l'enregistrement, selon au moins une séquence de marquage numérique unique ou quasi-unique prédéterminée, et pour enregistrer les vibrations provoquées par l'activation du dispositif de vibration (40) sous forme de marquage numérique visible et / ou d'accélération, et en particulier, de façon additionnelle, sous forme d'un marquage numérique audible, dans l'enregistrement.

12. Système (10) selon la revendication 11, comprenant en outre au moins un dispositif serveur (20) auquel le dispositif d'enregistrement (30) est connecté ou connectable, **caractérisé en ce que** le dispositif d'enregistrement (30) est configuré pour requérir ladite au moins une séquence de marquage numérique unique ou quasi-unique auprès dudit au moins un dispositif serveur (20), le dispositif serveur (20) étant configuré pour, lors de la réception de la requête provenant du dispositif d'enregistrement (30), sélectionner ou générer ladite au moins une séquence de marquage numérique unique ou quasi-unique et fournir ladite au moins une séquence de marquage numérique unique ou quasi-unique au dispositif d'enregistrement (30).

13. Système (10) selon la revendication 11 ou la revendication 12, **caractérisé en ce que** le dispositif d'enregistrement (30) est configuré pour inclure des signaux de l'accéléromètre (42) dans les données de l'enregistrement.

14. Système (10) selon l'une des revendications 11 à 13, **caractérisé en ce que** le dispositif d'enregistrement (30) et le dispositif serveur (20) sont configurés pour mettre en œuvre un procédé selon l'une des revendications 1 à 7.

15. Système (10) selon l'une des revendications 11 à 14, **caractérisé en ce que** le dispositif d'enregistrement (30) est configuré pour transmettre l'enregistrement audit au moins un dispositif serveur (20) après avoir terminé l'enregistrement et le dispositif serveur (20) est configuré pour analyser l'enregistrement pour ce qui est de la présence de ladite au moins une séquence de marquage numérique unique ou quasi-unique, notamment conformément au procédé selon l'une des revendications 8 à 10.
